# EUROPEAN PATENT APPLICATION

(11) **EP 0 553 525 A1**
(43) Date of publication of application: **04.08.1993**
(21) Application number: 92300854.4
(22) Date of filing: 31.01.1992
(51) Int. Cl.: H04R 9/06, H04R 27/00, H04R 1/02, H04R 5/02, A47C 27/00, A61H 23/00

(54) **Bodily sensed speakers**

(71) Applicant: Lee, Jeong Gi, Kangdong-gu, Seoul (KR)
(72) Inventor: Lee, Jeong Gi, Kangdong-gu, Seoul (KR)
(74) Representative: Powell, Stephen David

(57) **Abstract**

A bodily sensed speaker comprises a casing having an upper part (9) and a lower part (5), the upper part having a central circular aperture (10) closed by a cap (14), a thin magnetic disk (20) with a small diameter centrally attached on the inside of the cap, a tubular member (11) fixed around the central circular aperture of the upper part, a solenoid coil (12) wound around the tubular member, and an oscillation body for oscillating in response to variation of the magnetic field of the solenoid coil, wherein gaps are formed between the upper and lower surfaces of the oscillation body and the inside of the upper and lower part of the casing when the oscillation body is fixed on the inside wall of the casing by means of the oscillation ring, so that the oscillation body may freely oscillate upward and downward in response to variation of the magnetic field of the solenoid coil conducting current.

## Description

The present invention concerns bodily sensed speakers, and a musical sound reproducing system comprising a plurality of bodily sensed speakers.

To effectively enjoy music usually it requires us to sufficiently feel the rhythm, tone and melody played. Conventional musical sound reproducing systems have focused on the ear for the effective feeling of these characteristics.

Meanwhile, the rhythm has a close connection with bodily movements such as dance. Hence, it may be considered that the rhythm is a factor of the music which is felt not only through the ear, but also through the body.

It is an object of the present invention to provide a bodily sensed speaker (hereinafter referred to as "body speaker") for a musical sound reproducing system which enables us to feel the music not only through the ear, but also through the body.

It is another object of the present invention to provide a music cushion equipped with a plurality of the body speakers.

It is a further object of the present invention to provide a music player's waistcoat equipped with a plurality of the body speakers.

It is still another object of the present invention to provide a music player's belt equipped with a plurality of the body speakers.

It is further another object of the present invention to provide a mattress equipped with a plurality of the body speakers.

According to the present invention, a body speaker comprises a casing having an upper part and a lower part, the upper part having a central circular aperture closed by a cap, a thin magnetic disk with a small diameter centrally attached on the inside of the cap, a tubular member fixed around the central circular aperture of the upper part, a solenoid coil wound around the tubular member, and an oscillation body for oscillating in response to variation of the magnetic field of the solenoid coil, the oscillation body comprising a core consisting of a disk and a cylindrical projection formed centrally and integrally with the disk, a flat ring-shaped permanent magnet fixedly received around the cylindrical projection, a flat ring-shaped support ring concentrically fixed on the permanent magnet, and at least a resilient membranous oscillation ring fixed around the oscillation body, the outer edge portions of the oscillation ring being fixed along the inside wall of the casing, the lower end portion of the tubular member with the solenoid coil being loosely inserted into the gap between the side wall of the cylindrical projection of the core and the inside surfaces of the permanent magnet and support ring, wherein gaps are formed between the upper and lower surfaces of the oscillation body and the inside surfaces of the upper and lower part of the casing when the oscillation body is fixed on the inside wall of the casing by means of the oscillation ring, so that the oscillation body may freely oscillate upward and downward in response to variation of the magnetic field of the solenoid coil conducting current.

According to one aspect of the present invention, one end of the tubular member has a flange formed perpendicularly to the side surface of the tubular member, so that the flange may be supported by the peripheral portions of the central circular aperture of the upper part of the casing. Also it is preferable to provide the other end of the tubular member with a short flange so as to prevent the solenoid coil wound around the tubular member from escaping from the tubular member.

According to another aspect of the present invention, the casing may comprise an upper part, a lower part, and a frame for supporting the upper and lower parts.

According to still another aspect of the present invention, the cap closing the central aperture of the upper part is shaped concave like a cup with the bottom having a plurality of holes for passing the magnetic field lines of a small flat permanent magnet that is attached to the inside of the bottom and may be shaped like a disk or ring with or without a plurality of holes. The upper end of the cup is provided with a flange rested on the upper flange of the one end of the tubular member. The side and bottom portions of the cap are inserted in the tubular member.

According to a further aspect of the present invention, there may be provided two resilient membranous oscillation rings, one of which is interposed between the disk portion of the core and the flat ring-shaped permanent magnet, and the other between the permanent magnet and the flat ring-shaped support ring.

According to another aspect of the present invention, a resilient body such as rubber may be attached to the insides of the upper and lower parts of the casing so as to help the oscillation body oscillate more resiliently.

In a preferred embodiment said oscillation ring is fixed to said support ring with means comprising a synthetic resin and adhesive applied to an inner edge of said oscillation ring.

In a preferred embodiment said oscillation ring is fixed to said support ring with means comprising a plurality of inner lugs integrally formed along the inner edge of said oscillation ring, said lugs being interposed between said permanent magnet and said support ring.

In a preferred embodiment said oscillation ring is fixed to the inside wall of said casing with means comprising a synthetic resin laid on the outer edge of said oscillation ring, said synthetic resin being interposed between the end surfaces of said upper and lower parts.

In a preferred embodiment said oscillation ring is fixed to the inside wall of said casing with means comprising a plurality of outer lugs integrally formed with said oscillation ring, a plurality of grooves formed on the upper end of said lower part to correspond with said lugs, and the lower end of said upper part for holding said lugs against the bottom of said grooves.

Preferred embodiments of the present invention will now be described by way of example only with reference to the accompanying drawings, of which:
Fig. 1 is an exploded perspective view of a body speaker according to one embodiment of the present invention;
Fig. 2 is a cross sectional view of a body speaker of Fig. 1; and
Fig. 3 is a view similar to Fig. 2 for illustrating another embodiment of the present invention;
Fig. 4 is a perspective view of the tubular member shown in Fig. 3;
Fig. 5 is an exploded perspective view for illustrating the small flat permanent magnet being attached to the inside of the bottom of the cap as shown in Fig. 3;
Fig. 6 is an enlarged cross sectional view of the tubular member in which the cap and small flat permanent magnet are inserted as shown in Fig. 3;
Fig. 7 is a perspective view of the resilient membranous oscillation rings as shown in Fig. 3; and
Figs. 8A, 8B, 8C and 8D illustrate the various embodiments of a musical sound reproducing system according to the present invention.

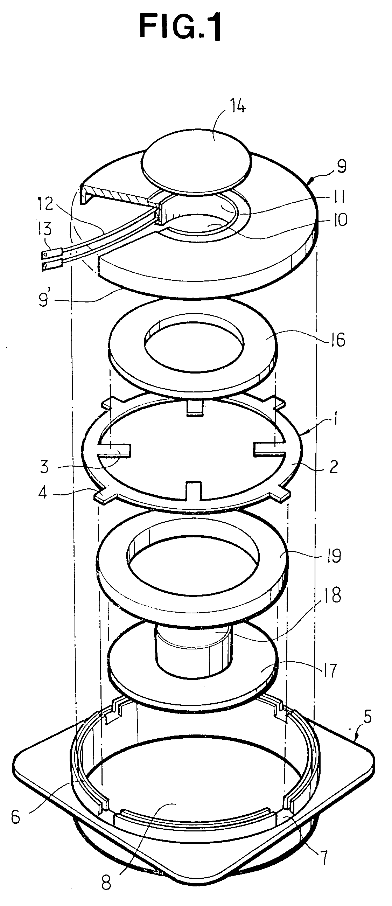

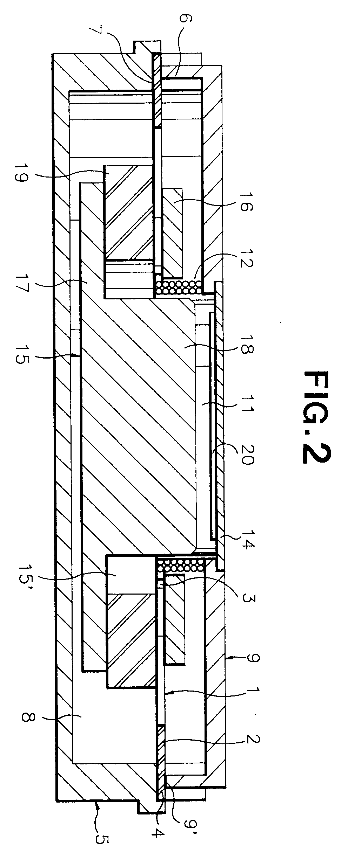

Referring to Figs. 1 and 2, an oscillation body is mounted inside a casing that comprises an upper part 9 with a central circular aperture 10, a cap 14 closing the aperture 10, and a lower part 5. A thin magnetic disk 20 with a small diameter is centrally attached on the inside of the cap 14. The oscillation body comprises a core consisting of a disk 17 and a cylindrical projection 18 formed centrally and integrally with the disk 17, a flat ring-shaped permanent magnet 19, a flat ring-shaped support ring 16 and a resilient membranous oscillation ring 2.

A tubular member 11 is fixed around the central circular aperture 10 of the upper part 9, and a solenoid coil 12 is wound around the tubular member 11.

The flat ring-shaped permanent magnet 19 is fixedly received around the cylindrical projection 18 with a proper gap between the side wall of the projection and the inside surface of the permanent magnet.

As shown in Fig. 2, the resilient membranous oscillation ring 2 is fixedly arranged between the permanent magnet 19 and the support ring 16. For example, the oscillation ring 2 has a plurality of inner and outer lugs 3, 4, which inner lugs 3 are interposed between the support ring 16 and permanent magnet 19 to fix the oscillation ring 2.

Thus, the support ring 16, oscillation ring 2, permanent magnet 19 and core 17, 18 are integrally fixed together so as not to allow any relative motions therebetween. Meanwhile, there is formed a suitable gap between the inside surface of the support ring 16 and the side wall of the cylindrical projection 18. The oscillation body thus obtained is suspended inside the casing by means of the outer lugs 4 interposed between the edge portions of the upper and lower part 9 and 5 as shown in Fig. 2.

Suitable synthetic resin and adhesive may be used for fixedly assembling the parts of the oscillation body. Means for fixing the oscillation ring to the inside wall of the casing may comprise a plurality of outer lugs 4 integrally formed with the oscillation ring, a plurality of grooves 7 formed on the upper end of the lower part to correspond with the lugs, and the lower end of the upper part for holding the lugs against the bottom of the grooves.

When the oscillation body is completely assembled, the tubular member 11 with the solenoid coil 12 requires to be freely moved between the inside surfaces of the support ring 16 and permanent magnet 19 and the side wall of the projection 18. Suitable gaps must be formed between the upper and lower surfaces of the oscillation body and the upper and lower inner surfaces of the casing.

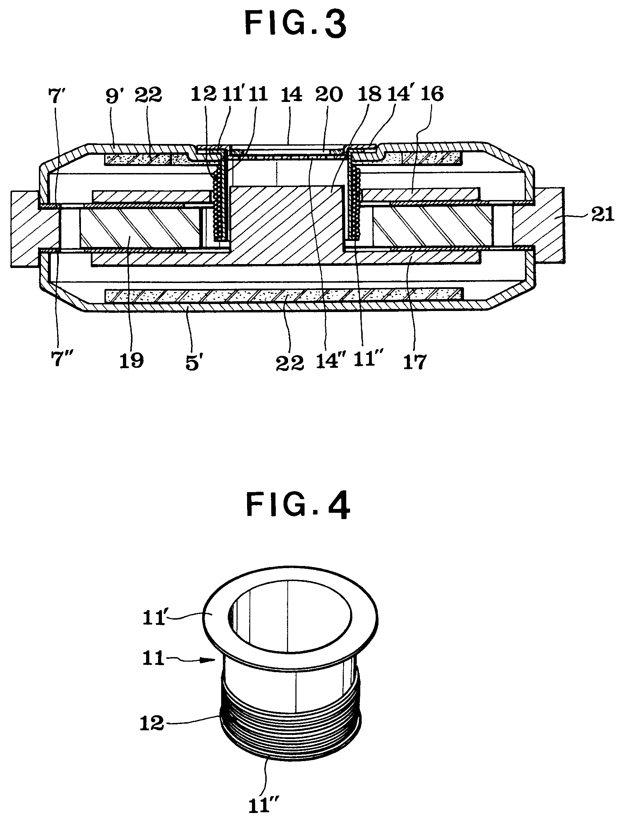

Preferably, one end of the tubular member 11, as shown in Figs. 3, 4 and 6, has a flange 11' formed perpendicularly to the side surface of the tubular member, so that the flange 11' may be supported by the peripheral portions of the central circular aperture 10 of the upper part of the casing. Thus the tubular member 11 may be more firmly fixed to the upper part. Also it is more preferable to provide the other end of the tubular member (11) with a short flange (11'') so as to prevent the solenoid coil (12) wound around the tubular member (11) from escaping therefrom.

Moreover, the casing may comprise an upper and lower parts 9' and 5, made of a light metal such as aluminum, and a plastic frame 21 for supporting the upper and lower parts. The plastic frame 21 is shaped as a short cylinder with a circular inner flange 21' formed along the half line of the inside. The flange 21' is to support the edge portions of the oscillation rings 7' and 7''. In this case, one oscillation ring 7'' is interposed between the disk portion of the core and the flat ring-shaped permanent magnet 19, and the other 7' between the permanent magnet 19 and the flat ring-shaped support ring 16, so that the oscillation body may be more firmly and resiliently hung by means of the two oscillation rings, whose peripheral portions are firmly fixed to the plastic frame 21. The peripheral portions of the two oscillation rings 7' and 7'' are respectively interposed between the ring-shaped end surfaces of the upper and lower parts 9' and 5' of the casing and the upper and lower surfaces of the flange 21' of the frame 21.

The resilient membranous oscillation rings 7', 7'' shown in Fig. 3 has a central opening 7b for receiving the projection 18 of the core, and a plurality of arcuate slits for increasing the flexibility of the oscillation rings. The material used to make the oscillation rings may be a metal, nonferrous metal, synthetic resin, paper, or others to inherently maintain suitable resiliency.

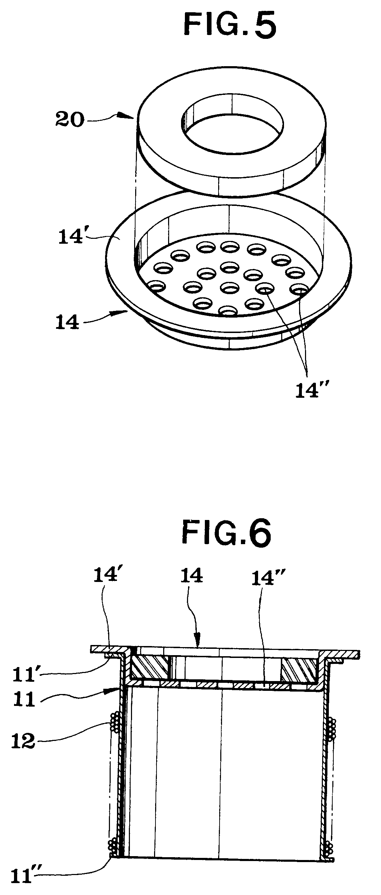

As shown in Figs. 5 and 6, the cap 14 closing the central aperture 10 of the upper part 9' is shaped concave like a cup with the bottom having a plurality of holes 14'' for passing the magnetic field lines of a small flat permanent magnet 20 that is attached to the inside of the bottom and may be shaped like a disk or ring with or without a plurality of holes. The upper end of the cap is provided with a flange 14' rested on the upper flange 11' of the one end of the tubular member 11. The side and bottom portions of the cap 14 are inserted in the tubular member.

Preferably, a resilient body 22 such as rubber may be attached to the insides of the upper and lower parts 9' and 5' of the casing so as to help the oscillation body oscillate more resiliently.

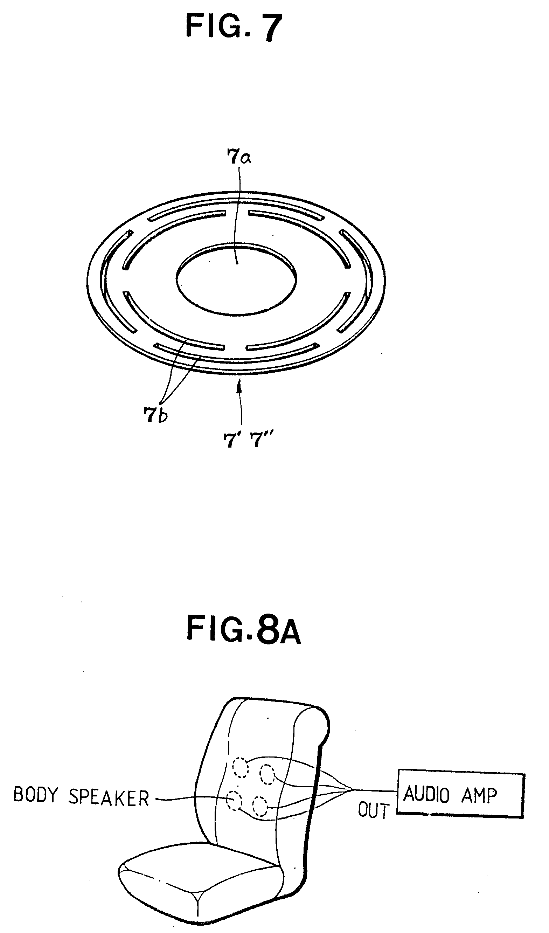

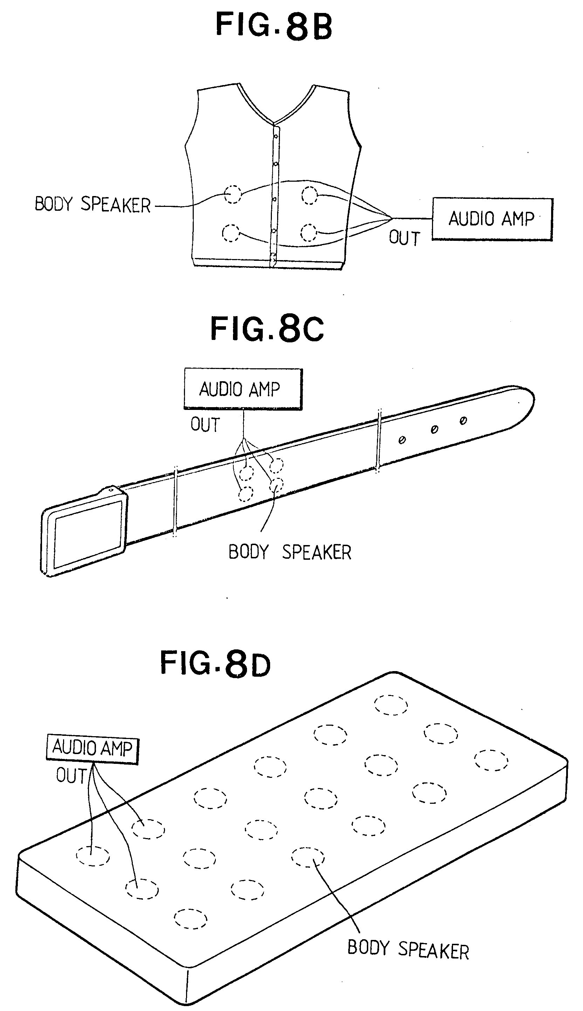

There are shown in Figs. 8A, 8B, 8C and 8D musical sound reproducing systems respectively comprising a cushion, waistcoat, belt, and mattress equipped with the inventive body speakers, and an audio amplifier.

One of the methods for installing the body speakers in a cushion may be a process for integrally molding the cushion with the body speakers arranged in a pattern in a mold.

In operation of the body speakers, when the sound signals containing music generated by the audio amplifier is conducted into the solenoid coil of the oscillation body 16, 17, 18, 19, 2, 7', 7'' in the casing, the oscillation body oscillates upwards and downwards. The oscillation is caused by the interaction between variation of the magnetic field of the solenoid coil and the magnetic field of the permanent magnet 19. Consequently, the casing containing the oscillation body altogether oscillates according to variation of the intensity of the sound signals, so that the user of the cushion, waistcoat or belt containing the inventive body speakers vividly feels the rhythm of the music loaded on the sound signals through his body sensing the oscillation of the speakers.

Meanwhile, there exists always a mutual attraction between the thin magnetic disk 20 and the upper surface of the cylindrical projection 18 due to their magnetic fields, which helps the oscillation of the oscillation body 16, 17, 18, 19, 2, 7', 7'' when the solenoid coil conducts currents.

The inventive body speakers more effectively oscillate in response to the sound signals loaded with music mostly containing medium or low tones. Hence, when listening to music reproduced by a stereo sound system comprising the inventive body speakers, only the medium and low tone signals of the music may be conducted into the body speakers so as to cause the body speakers to more effectively oscillate.

If the players of a jazz or popular music band composed of electric guitars, electronic organ, drum, etc. put on a waistcoat or belt equipped with the inventive body speakers, they may more effectively play music, fully absorbed therein, because they bodily sense the rhythm of the music that they tangibly feel through the body speakers.

Of course, it is preferable that the inventive body speakers are arranged to be in the part parts of a waistcoat or belt that are positioned in the back of the user.

Particularly, if the inventive body speakers are suitably arranged in a back cushion of a seat of a vehicle, and connected with the audio amplifier of a stereo sound system of the vehicle, there is obtained a very effective musical sound reproducing system of the vehicle.

Naturally, the inventive body sense speakers may not only be used in all kinds of cushions or pads which are installed in the seats or beds arranged in a hotel, hospital, ship, airplane, theater, cafe, music hall, electronic game room, etc for sitting, reclining, or supporting the head of a person, but also suitably arranged in the floor of a dance hall in order to let the dancing persons bodily feel the rhythms of dance music transmitted through their soles.

Additionally, the body sense speakers may be installed in footwears.

## Claims

1. A body speaker comprising:
a casing having an upper part (9) and a lower part (5), said upper part having a central circular aperture (10) closed by a cap (14);
a thin magnetic disk (20) with a small diameter centrally attached on the inside of the cap;
a tubular member (11) fixed around the central circular aperture of said upper part;
a solenoid coil (12) wound around said tubular member;
an oscillation body for oscillating in response to variation of the magnetic field of said solenoid coil;
said oscillation body comprising a core comprised of a disk and a cylindrical projection (18) formed centrally and integrally with said disk a flat ring-shaped permanent magnet (19) fixedly received around said cylindrical projection, a flat ring-shaped support ring (16) concentrically fixed on said permanent magnet, and at least a resilient membranous oscillation ring (2, 7'. 7'') fixed around said oscillation body;
the outer edge portions of said oscillation ring being fixed along the inside wall of said casing; and
the lower end portion of said tubular member with said solenoid coil being loosely inserted into the gap (15') between the side wall of said cylindrical projection of said core and the inside surfaces of said permanent magnet and support ring;
wherein gaps are formed between the upper and lower surfaces of said oscillation body and the inside surfaces of the upper and lower part of said casing when said oscillation body is fixed on the inside wall of said casing by means of said oscillation ring, so that said oscillation body may freely oscillate upward and downward in response to variation of a magnetic field provided by said solenoid coil conducting current.

2. A body speaker as claimed in claim 1, wherein one end of said tubular member (11) has a flange (11') formed perpendicularly to the side surface of said tubular member, so that said flange may be supported by the peripheral portions of the central circular aperture (10) of the upper part (9') of the casing, and the other end of said tubular member (11) having a short flange (11') so as to prevent the solenoid coil (12) wound around the tubular member (11) from escaping therefrom.

3. A body speaker as claimed in claim 1 or 2, wherein said casing comprises an upper part (9'), a lower part (5'), and a plastic frame (21) for supporting said upper and lower parts, said upper and lower parts being made of a light metal such as aluminum.

4. A body speaker as claimed in any preceding claim, wherein said cap (14) closing said central aperture (10) of said upper part (9') is shaped concave like a cup with the bottom having a plurality of holes (14'') for passing the magnetic field lines of said thin magnetic disk (20) attached to the inside of said bottom, the upper end of the cap being provided with a flange (14') rested on said upper flange (11') of said tubular member (11), the side and bottom portions of said cap (14) being inserted in said tubular member.

5. A body speaker as claimed in claim 4, wherein said thin magnetic disk is ring-shaped with a plurality of holes.

6. A body speaker as claimed in any preceding claim, wherein two resilient membranous oscillation rings (7', 7'') are provided one (7'') of which is interposed between the disk portion of said core and said flat ring-shaped permanent magnet (19), and the other between said permanent magnet (19) and said flat ring-shaped support ring (16), thereby said oscillation body being hung via said two oscillating rings to the frame (21) of said casing.

7. A body speaker as claimed in any preceding claim, wherein a resilient body such as rubber is attached to the insides of said upper and lower parts (9', 5') of the casing so as to help said oscillation body oscillate more resiliently.

8. A musical sound reproducing system of a vehicle, ship, aircraft, hospital, theatre, music hall, cafe, or electronic game room, comprising an audio amplifier, a plurality of body speakers as claimed in any preceding claim and a seat or back cushion equipped with said plurality of body speakers, said body speakers being arranged in a suitable pattern within said cushion, said plurality of body speakers being connected with said audio amplifier, whereby said plurality of body speakers rhythmically oscillate in response to variation of the magnetic field of the solenoid coil conducting signals from said audio amplifier.

9. A dance hall comprising an audio amplifier, a plurality of body speakers as claimed in any of claims 1 to 7, and a floor equipped with said plurality of body speakers, said body speakers being arranged in a suitable pattern in said floor, said plurality of body speakers being connected with said audio amplifier, whereby said plurality of body speakers rhythmically oscillate in response to variation of the magnetic field of the solenoid coil conducting signals from said audio amplifier in order to let dancing persons on said floor feel the rhythms of dance music transmitted through their soles.

10. A waistcoat, belt, mattress, cushion, pillow or article of footwear comprising a plurality of body speakers as claimed in any of claims 1 to 7, and comprising an audio amplifier and a pad equipped with said plurality of body speakers, said body speakers being arranged in a suitable pattern within said pad, said plurality of body speakers being connected with said audio amplifier, whereby said plurality of body speakers rhythmically oscillate in response to variation of the magnetic field of the solenoid coil conducting signals from said audio amplifier.

11. A bodily sensing musical sound system comprising a stereo sound system, a low pass filter for separating the medium and low frequency signals from the output of said stereo sound system, an amplifier for amplifying the output of said low pass filter, and a cushion equipped with a plurality of the body speakers as claimed in any of claims 1 to 7 for receiving the output of said amplifier, said body speakers being arranged in a suitable pattern in said cushion.
